(19) **Europäisches Patentamt / European Patent Office / Office européen des brevets**

(11) **EP 1 423 751 B1**

(12) **EUROPEAN PATENT SPECIFICATION**

(45) Date of publication and mention
of the grant of the patent:
**27.08.2008 Bulletin 2008/35**

(51) Int Cl.:
*G02F 1/313* (2006.01)

(21) Application number: **02735621.1**

(22) Date of filing: **14.06.2002**

(86) International application number:
**PCT/GB2002/002736**

(87) International publication number:
**WO 2002/103448 (27.12.2002 Gazette 2002/52)**

(54) **INTEGRATED OPTICAL SIGNAL HANDLING DEVICE**

INTEGRIERTE SIGNALVERARBEITUNGSEINRICHTUNG

DISPOSITIF DE MANIEMENT DE SIGNAL OPTIQUE INTEGRE

(84) Designated Contracting States:
**AT BE CH CY DE DK ES FI FR GB GR IE IT LI LU MC NL PT SE TR**

(30) Priority: **15.06.2001 GB 0114648**

(43) Date of publication of application:
**02.06.2004 Bulletin 2004/23**

(73) Proprietor: **Gemfire Europe Limited**
**Livingston EH54 8SF (GB)**

(72) Inventors:
• **KUIPERS, Wichert**
**NL-1963 DG Heemskerk (NL)**
• **HOEKSTRA, Tsjerk, Hans**
**Edinburgh EH14 7BS (GB)**
• **NUTT, Alan Charles Guthrie**
**West Lothian EH49 6SH (GB)**

(74) Representative: **Mills, Julia**
**D Young & Co**
**120 Holborn**
**London EC1N 2DY (GB)**

(56) References cited:
**WO-A-01/33267          WO-A-01/38905**
**US-A1- 2002 025 105**

• **CHU S T ET AL: "WAVELENGTH TRIMMING OF A MICRORING RESONATOR FILTER BY MEANS OF A UV SENSITIVE POLYMER OVERLAY" IEEE PHOTONICS TECHNOLOGY LETTERS, IEEE INC. NEW YORK, US, vol. 11, no. 6, June 1999 (1999-06), pages 688-690, XP000835433 ISSN: 1041-1135**
• **LITTLE B E ET AL: "MICRORING RESONATOR CHANNEL DROPPING FILTERS" JOURNAL OF LIGHTWAVE TECHNOLOGY, IEEE. NEW YORK, US, vol. 15, no. 6, 1 June 1997 (1997-06-01), pages 998-1005, XP000700611 ISSN: 0733-8724 cited in the application**
• **SUZUKI S ET AL: "INTEGRATED-OPTIC DOUBLE-RING RESONATORS WITH A WIDE FREE SPECTRAL RANGE OF 100 GHZ" JOURNAL OF LIGHTWAVE TECHNOLOGY, IEEE. NEW YORK, US, vol. 13, no. 8, 1 August 1995 (1995-08-01), pages 1766-1771, XP000537135 ISSN: 0733-8724 cited in the application**
• **ELDADA L ET AL: "THERMO-OPTICALLY ACTIVE POLYMERIC PHOTONIC COMPONENTS" OPTICAL FIBER COMMUNICATION CONFERENCE. (OFC). TECHNICAL DIGEST POSTCONFERENCE EDITION. BALTIMORE, MD, MARCH 7 - 10, 2000, NEW YORK, NY: IEEE, US, vol. 2 OF 4, 7 March 2000 (2000-03-07), pages WH1-1-WH1-3, XP001017483 ISBN: 0-7803-5952-6**

EP 1 423 751 B1

**Description**

This invention relates to integrated optical signal handling devices, for example (though not exclusively) devices for optical signal routing, switching, multiplexing or demultiplexing.

In the development of optical networks, a technology known as dense wavelength division multiplexing (DWDM) is being extensively investigated.

DWDM employs many closely spaced optical carrier wavelengths, multiplexed together onto a single waveguide such as an optical fibre. The carrier wavelengths are spaced apart by as little as 50 GHz in a spacing arrangement defined by an ITU (International Telecommunications Union) channel "grid". Each carrier wavelength may be modulated to provide a respective data transmission channel. By using many channels, the data rate of each channel can be kept down to a manageable level, so avoiding the need for expensive very high data rate optical transmitters, optical receivers and associated electronics.

It has been proposed that DWDM can make better use of the inherent bandwidth of an optical fibre link, including links which have already been installed. It also allows a link to be upgraded gradually, simply by adding new channels.

However, one particularly advantageous feature of DWDM is that it allows all-optical handling of telecommunications signals, rather than via an intermediate conversion to and from the electrical domain. To implement this aspect of DWDM technology, it is necessary to develop a new range of optical components such as routers, switches, crosspoint networks, channel add-drop multiplexers, variable optical attenuators and so on. It has been proposed that so-called optical integrated circuits offer potential to meet these needs.

There is therefore a need for a device which handles optical signals in the optical domain but which is controllable to allow wavelength-selective routing or processing of the optical signals.

One previously proposed arrangement is to demultiplex an input WDM optical signal into individual wavelength channels using, for example, one or more arrayed waveguide devices (AWGs). The N individual wavelength channels can then be switched, routed or substituted, for example by an N x N optical crosspoint switch, before being multiplexed back into an output WDM signal by a corresponding group of one or more AWGs. While this arrangement would fulfil the required functionality, it is perceived to be very complex (particularly a large N x N crosspoint switch) and can introduce unwanted losses because of the number of components forming the optical signal path through the apparatus. Also, using silicon and/or silica based materials, it would be physically very large in comparison to many other integrated optical devices. If, for example, it is desired only to have the facility to (selectively) tap off one wavelength channel from a WDM signal, the solution described above would be considered far too complex for this purpose.

This invention provides an integrated optical signal handling device comprising:

a substrate;

a light-guiding waveguide formed in or on the substrate, the waveguide being arranged to carry an input optical signal;

a resonator cavity region formed in or on the substrate, of a material having a rate of change of refractive index with temperature of greater magnitude than that of the substrate or waveguide material, the resonator region being adjacent to the waveguide so as to allow optical coupling between the waveguide and the resonator region at one or more coupling wavelengths; and

a heating and/or cooling arrangement operable to vary the temperature of at least the resonator region so as to cause corresponding variation in the coupling wavelengths.

The invention builds on integrated resonator cavity arrangements such as the previously proposed "disk resonator" arrangement - or other arrangements such as generally circular, annular, elliptical and/or substantially planar resonator arrangements - to provide an integrated optical signal handling device having controllable signal handling properties.

The invention provides a resonator with an associated heating and/or cooling arrangement which, by varying the temperature of at least the resonator region can alter the coupling wavelengths at which light is coupled between the resonator and a nearby waveguide. Several useful and controllable optical components can be formed using this basic arrangement.

For example, an input WDM signal can be directed along the waveguide. The resonator temperature is set so that at the wavelength of a WDM channel of interest light is coupled between the waveguide and the resonator. So, the channel of interest can be removed form the input signal (a channel "drop" function). That channel can be routed elsewhere in embodiments of the invention by passing another waveguide near to the resonator so that the channel of interest is coupled into that waveguide for output.

As another example, a channel "add" function can be achieved in embodiments of the invention by launching a channel to be added, with the coupling wavelength set to that channel's wavelength, into the second waveguide; it is coupled into the resonator and out to the first waveguide.

These are just brief examples of a large range of useful optical components of conveniently simple design which can be fabricated using a temperature-controllable coupling resonator as their basis.

The resonator could be formed of a glass or similar core material, but to achieve a greater variation of the optical properties of the resonator with temperature, and also to facilitate the fabrication process, it is preferred that the resonator region is formed of a polymer material.

For a high finesse of the resonance process, giving in turn a more useful and sharp response of the device, it is preferred that the resonator region is a generally ring- or generally disk-shaped region. While a precise circular or elliptical shape can be useful for predictability of performance, for example, it is also noted that small deviations from such a mathematically correct shape can in fact give an advantageously higher "Q" factor (see below) in the resonator.

Throughout the present specification, it is noted that any references to the shape of any fabricated formation are to be considered within the normal tolerance limits imposed by engineering aspects of the fabrication process itself, including those relevant to the shape of the resonator in the plane of or perpendicular to the substrate and also those relevant to the degree to which the sides of any planar shape can be made perpendicular to the substrate.

Preferably the heating and/or cooling arrangement comprises at least an electrical heating element and/or at least a Peltier element. However, in other embodiments an optical heating arrangement such as one or more laser devices arranged to irradiate at least the resonator region could be used. This arrangement has the advantage of allowing the heating arrangement to be slightly more remote from the active optical components (e.g. the resonator) and avoiding the need for electrical conductors to be fabricated over the resonator. This in turn could lead to more efficient use of the substrate area, as the electrical connections are often a space-limiting factor in arrays of integrated optical components. Another advantage is the possibility of maintenance or modification of the heating arrangement without dismantling the resonator arrangement.

Although the waveguide could be disposed at least partly alongside (i.e. in the plane of) the resonator, for efficient use of the substrate area and general ease of fabrication it is preferred that the waveguide is not disposed in the plane of the resonator region. Preferably the resonator region and the waveguide are formed so as to overly, at least in part, one another (here the skilled man will appreciate that the wording used does not necessarily imply an order of fabrication of the respective parts on the substrate).

The resonator could be bounded by cladding material, but in order to reduce bending losses in the resonator (or, put another way, to allow a physically smaller resonator to be used) it is preferred that the resonator region is bounded, in the plane of the resonator region, by an air gap. Preferably a polymer cladding layer is disposed on the resonator region. However, with some materials an expansion in the planar direction of the resonator can change the dimensions of the resonator in such a manner as to counteract the change in refractive index brought on by a temperature change. In such cases it is preferred that the resonator is constrained (e.g. by a cladding) to reduce expansion / contraction in a planar substrate direction.

In order to form more advanced optical components such as an add-drop multiplexer or a router it is preferred that the device comprises at least a second light-guiding waveguide formed in or on the substrate adjacent to the resonator region so as to allow optical coupling between the waveguide and the resonator region at one or more coupling wavelengths.

Suzuki et al, in the paper "Integrated-optic double-ring resonators with a wide free spectral range of 14GHz", Journal of Lightwave Technology, vol. 13, no. 8, pp 1766-1771, 1995, propose a double ring resonator where light couples from a first waveguide into a first ring or disk, from which it couples to another adjacent ring or disk, finally coupling from the second ring or disk into an output waveguide. This idea has been further developed by Little et al in the paper "Microring resonator channel dropping filters", Journal of Lightwave Technology, vol. 15, no. 6, pp 998-1005, 1997.

WO 01/38905 A2 discloses a ring resonator employing local thermal tuning. The heating is used to vary the resonator's resonance wavelength in order to tune the device.

WO 01/33267 A1 discloses a tunable OADM including a ring resonator which is thermally tuned by a grating reflector.

This invention also provides an integrated optical signal handling device comprising:

a substrate;
a light-guiding waveguide formed in or on the substrate, the waveguide being arranged to carry an input optical signal;
a resonator arrangement comprising two or more resonator cavity regions formed of polymer material in or on the substrate and optically coupled to allow transfer of optical signals between the resonator cavity regions, the resonator arrangement being adjacent to the waveguide so as to allow optical coupling between the waveguide and the resonator arrangement at one or more coupling wavelengths; and
a heating and/or cooling arrangement operable to vary the temperature of at least one of the resonator cavity regions.

This aspect of the invention builds on integrated resonator cavity arrangements such as the previously proposed "double-disk resonator" arrangement - or other arrangements such as generally circular, annular, elliptical and/or substantially plural planar resonator arrangements - to provide an integrated optical signal handling device having controllable signal handling properties.

The invention provides a device having a multi-cavity (e.g. two cavity) resonator arrangement with an associated heating and/or cooling arrangement which, by varying the temperature of at least a resonator region of the resonator arrangement can alter the coupling wavelengths or other properties by which light is coupled between the resonator cavities. Several useful and controllable optical components can be formed using this basic arrangement.

In order to form more advanced optical components such as an add-drop multiplexer or a router it is preferred that the device comprises at least a second light-guiding waveguide formed in or on the substrate adjacent to the resonator region so as to allow optical coupling between the waveguide and the resonator region at one or more coupling wavelengths.

Preferably the resonator arrangement comprises a series arrangement of two or more resonator cavities so that, in use, light may be coupled:

between the light guiding waveguide and a first resonator cavity in the series arrangement;
between the first resonator cavity and a further resonator cavity in the series arrangement; and
between the further resonator cavity and the second light guiding waveguide.

In an alternative embodiment the resonator arrangement may provide a parallel arrangement of two or more resonator cavities linking the light guiding waveguide and the second light guiding waveguide so that light may be coupled between the light guiding waveguide and the second light guiding waveguide via two or more resonator cavities at a time.

In order to couple light between a disk / ring-like resonator and a waveguide, the waveguide is generally either positioned substantially in the plane of the resonator but displaced laterally, or positioned out of the plane of the resonator and at least partially overlapping in the lateral direction. This latter arrangement is often referred to as "vertical" coupling. An established technique for vertically coupling a waveguide to a resonator is to use a substantially straight waveguide, at least in respect of the section overlapping the resonator. This tends to couple between "normal" waveguide modes in the waveguide and so-called "whispering gallery" modes in the resonator. This arrangement leads to a phase mismatch between the waveguide and the resonator, which can give difficulties in designing the arrangement and can also require the gap between the waveguide and the resonator to be relatively small, leading to potential difficulties in fabrication.

Preferably the waveguide follows a substantially curved path over at least part of a coupling portion at which light may be coupled between the waveguide and the resonator. This can provide another means of coupling between the waveguide and the resonator such as coupling between a so-called bendmode in the waveguide and a whispering gallery mode in the resonator.

When a non-straight waveguide path is used, it is preferred that an outer lateral edge of the waveguide is bounded by an air gap.

Preferably the cross-sectional area of the waveguide is enlarged over at least part of a coupling portion at which light may be coupled between the waveguide and the resonator. Preferably the cross-sectional area is enlarged in the plane of the resonator. This can provide a further means of coupling by allowing whispering gallery mode propagation to occur in the waveguide, so that coupling may take place between whispering gallery modes in the waveguide and whispering gallery modes in the resonator. This technique can provide a more relaxed tolerance for the gap between the waveguide and the resonator.

This invention also provides an integrated optical signal handling device comprising:

a substrate;
an optical signal handling arrangement comprising at least a region in or on the substrate arranged so that varying the temperature of the region varies the signal handling properties of the optical signal handling arrangement; and
a heating arrangement having one or more light sources for illuminating the region so as to vary the temperature of the region.

The invention recognises that previously proposed electrical heating and/or cooling arrangements comprising at least an electrical heater and/or at least a Peltier element have the disadvantages that (a) control electronics need to be fabricated, which may require a different substrate to the one being used to fabricate the optical system; and (b) electrical conductors are needed to drive each heating and/or cooling element, which take up valuable space on the substrate and limit how closely the heatable/ coolable elements may be positioned.

The invention makes use of an optical heating arrangement such as one or more laser devices arranged to irradiate at least the region of the signal handling arrangement. This has the advantage of allowing the heating arrangement to be slightly more remote from the active optical components (e.g. the resonator) and avoiding the need for electrical conductors to be fabricated over the resonator. This in turn could lead to more efficient use of the substrate area, as the electrical connections are often a space-limiting factor in arrays of integrated optical components. Another advantage is the possibility of maintenance or modification of the heating arrangement without dismantling the optical signal handling arrangement.

Preferably the optical signal handling arrangement comprises one or more resonator cavities coupled to one or more waveguides, whereby the coupling and/or resonant properties of the signal handling arrangement can be varied in response to the temperature of the resonator cavities.

Preferably at least the region is formed of a polymer material.

Previously proposed devices using disk or ring resonators or the like tend to have a free spectral range (FSR) of up to about 10 nm, with a tuneable range of about 5 nm. However, the wavelength range covered by Erbium doped amplifiers is about 30 nm wide, from about 1530 nm to about 1560 nm. It therefore appears that devices based on resonators of this type are not suitable for use over the full wavelength range provided by the Erbium doped amplifier.

This invention also provides an optical signal handling device comprising a wavelength separating device for separating an input optical signal into at least two wavelength channels, and at least two resonator arrangements for processing respective ones of the wavelength channels.

This aspect of the invention can allow the advantages of resonator type devices to be used across a wider wavelength range, by the use of a hybrid device having a wavelength separating device and two or more resonator arrangements.

Preferably the wavelength separating device is an arrayed waveguide grating.

Preferably each resonator arrangement has an associated reflector so as to reflect light back to the wavelength separating device. In this way, the wavelength separating device can act "in reverse" to recombine the wavelength channels after processing by the resonator arrangement.

Embodiments of the invention will now be described, by way of example only, with reference to the accompanying drawings in which:

Figure 1 is a schematic diagram of an integrated optical ring resonator;
Figure 2 schematically illustrates a resonator in a non-resonant condition;
Figure 3 schematically illustrates a resonator in a resonant condition;
Figure 4 schematically illustrates a resonator used as a channel drop filter;
Figure 5 schematically illustrates the wavelength response of the device of Figure 4;
Figure 6 schematically illustrates the use of a resonator as a channel add/drop multiplexer;
Figures 7 and 8 schematically illustrate electrical heating arrangements;
Figure 9 schematically illustrates a temperature response of the device of Figure 4 or Figure 6;
Figure 10 schematically illustrates the fabrication of a channel add/drop multiplexer;
Figures 11 and 12 schematically illustrates a side and perspective view respectively of an optically heated device;
Figure 13 schematically illustrates the use of a channel add/drop multiplexer within an optical communication network;
Figure 14 schematically illustrates a double-disk device according to a series resonator arrangement;
Figure 15 schematically illustrates a heating arrangement for the double-disk device of Figure 14;
Figure 16 schematically illustrates a double-disk device according to a parallel resonator arrangement; and
Figure 17 schematically illustrates the fabrication of a channel add/drop multiplexer;
Figures 18 and 19 schematically illustrate waveguide shapes for different types of resonator-waveguide coupling;
Figure 20 is a schematic diagram of a device using an arrayed waveguide grating (AWG) coupled to multiple resonators; and
Figure 21 is a schematic diagram of a device using an AWG coupled to multiple resonator/reflector arrangements.

A ring resonator is an optical transmission path in the shape of a continuous loop such that light propagating in the loop travels round and round indefinitely. In reality there will be some optical loss present, such as absorption or scatter and, unless an optical gain mechanism is present, the light will eventually decay away.

In its most general form, the optical loop may take several forms, such as (a) the cavity formed by two parallel mirrors, known as a Fabry-Perot etalon, which is used as the basis for most lasers and for interference filters; (b) a ring formed by three or more bulk mirrors, used in gyroscopes and early ring lasers; (c) a ring of optical fibre, which may be many metres long, used for fibre lasers, gyroscopes and optical filters; or (d) a ring or disk fabricated on a planar waveguide structure.

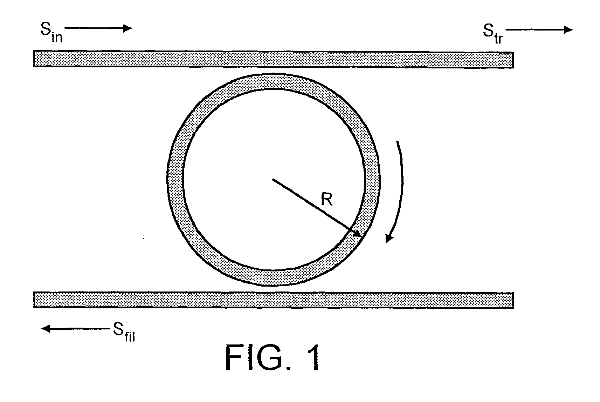

The basic form of the planar waveguide ring resonator is shown schematically in Figure 1. A ring of waveguide material is positioned in a coupling arrangement with two straight waveguide sections, as shown, such that there is a small gap, typically 0.1 to 1$\mu$m between the ring and the straight sections at their closest approach. Polychromatic light, $S_{in}$, enters from the left and travels along the upper straight section. As it passes the point of proximity to the ring light is coupled across into the ring through the mechanism of evanescent field coupling.

Once in the ring light travels round in a clockwise direction, returning to the position at which it entered the ring at the upper coupler. Now, assuming, that the transit time around the ring is less than the coherence time of the source, the optical wave will interfere with more light that is being coupled into the ring. If the two waves are in phase then constructive interference exists and the amplitude of the travelling wave is increased. Subsequent passes around the ring will lead to build up of the optical field in the ring until an equilibrium is established where light entering the ring equals light being lost from the ring.

If, however, the wave arriving at the lower coupler is slightly out of phase with the new light entering the ring then only partial constructive interference will take place. In this case it will be found that, after many transits around the ring, the optical signal will die out completely. Thus the ring only supports a particular frequency of light, known as the 'resonant frequency'. This occurs when the length of the ring is a whole number of wavelengths of the light propagating round it.

Each time light passes the point of proximity to the lower coupler some light is coupled out of the ring and into the upper straight section of waveguide. This light, $S_{fil}$, will travel to the left, as shown in Figure 1. This is the basis of the 'resonant filter' operation: polychromatic light entering the upper waveguide has a particular frequency component filtered from it and the remainder of the light, $S_{tr}$, continues along the upper section of waveguide.

It is a property of the ring resonator that if the ring is non-absorbing then all of the light which is at the resonant frequency is extracted from the input signal in the upper guide and is transferred to the output channel in the lower guide. Even with non-ideal, but substantially non-absorbing materials, this can form the basis of a very efficient channel drop device.

Three journal papers by B. E. Little et al describe uses of the ring or disk resonator, these being:(a) "Vertically coupled glass microring resonator channel dropping filters", IEEE Photonics technology Letters, vol.11, no.2, pp.215-217, 1999.
(b) "Microring resonator channel dropping filters", Journal of Lightwave Technology, vol,15, no.6, pp.998-1005, 1997.
(c) "Ultra-compact Si-SiO2 microring resonator optical channel dropping filters", IEEE Photonics technology Letters, vol. 10, no.4, pp.549-551, 1998

In its possible use as an add/drop device the figures of merit for a ring resonator are as follows:

**Free Spectral Range (FSR)**

The resonant condition occurs when an integer number of optical wavelengths fit exactly into the ring. There will therefore be a series of frequencies for which this condition is satisfied, $f_i$, given by

$$f_i = \frac{K \cdot c}{n_e \cdot 2 \cdot \pi \cdot R} \qquad (1)$$

where:

K is an integer,
c is the speed of light in vacuo,
$n_e$ is the effective index of the waveguide,
R is the radius of the ring resonator.

Each value of K therefore corresponds to a different longitudinal mode of the resonator, where there will be an integral number of wavelengths in the ring.

Assuming that the effective index is constant for all wavelengths, the separation between adjacent resonant frequencies, known the free-spectral range (FSR), is given by

$$FSR = \frac{c}{n_e \cdot 2 \cdot \pi \cdot R} \qquad (2)$$

As an add/drop device in a DWDM system it is preferred that the FSR of the ring resonator should be greater than the entire DWDM band - typically about a 30nm band - to prevent cross-talk. As an example of the dimensions involved, let the FSR be 30nm (3750GHz at around 1550nm), and assume $n_e$ is 3.5 for silicon. Solving (2) for R gives a required radius of 3.6um.

In order to minimise bending losses for such a small radius of curvature the index difference between the core and cladding materials needs be large so as to tightly confine the propagating mode.

**Finesse**

The Finesse of a resonator is defmed as

$$Finesse = \frac{FSR}{\Delta f}$$

where: $\Delta f$ is the full-width at half maximum (FWHM) of the resonant peak.

The FWHM, or passband, of an add/drop device defines the range of frequencies that may be added or dropped. If the FWHM is made too narrow, corresponding to a very high Finesse, then it is possible that the whole width of the required channel may not be selected and some light will remain in the main signal stream. This is deleterious for two reasons, (a) the dropped signal will be reduced in amplitude, and (b) if the same frequency is to be later added to the signal stream then cross-talk could result. If the FWHM is too wide then light from neighbouring channels may be extracted along with the required channel, leading to cross-talk.

Neglecting loss, the FWHM, $\Delta\lambda$, in terms of wavelength, is given by the following expression

$$\Delta\lambda = \frac{\kappa^2 \cdot \lambda_o{}^2}{2 \cdot \pi^2 \cdot R \cdot n_e}$$

where:

$\kappa$ is the coupling intensity between the straight waveguides and the ring.
$\lambda_o$ is the wavelength in vacuo.

Thus the passband is proportional to the square of the coupling coefficient, $\kappa$.

Continuing the above example, let the required passband be 0.4nm, then from (4) the required coupling coefficient would be 20%. A more typical passband in other applications might be 0.2 nm.

**Quality Factor**

The Quality Factor, Q, is the ratio of the time averaged power stored in the ring per cycle to the power coupled, or scattered, out of the ring. In the work referenced above by Little et al the Quality Factor was limited to 250 due to the straight and curved sections fusing together during manufacture, which greatly increased the coupling coefficient.

**Disk Resonator**

A feature of a highly curved waveguide is that the propagating mode ceases to make contact with the inside edge of the guide and becomes what is known as a 'whispering gallery' mode. In geometrical terms, it reflects from only the outside edge of the guide as it propagates round the bend. It will be obvious that, in this case, the inner edge of the ring resonator is redundant and so the ring may be replaced by a disk of uniform index.

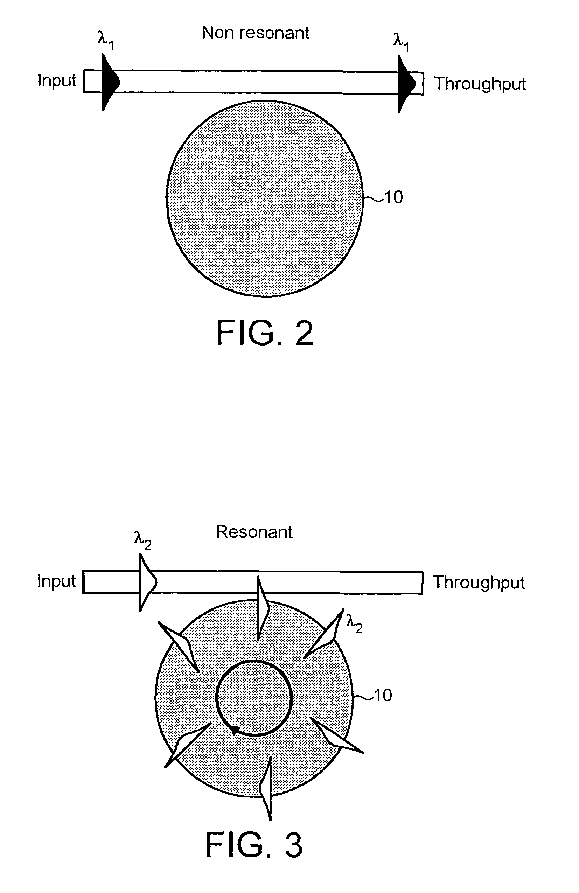

Figure 2 schematically illustrates a disk (rather than a ring as in Figure 1) resonator in a non-resonant condition. In this condition, input light at the non-resonant wavelength $\lambda_1$ passes straight through the device without being coupled to the disk 10. In a resonant condition shown in Figure 3, input light at the resonant wavelength $\lambda_2$ is coupled into the disk 10 and so is not present at the throughput output.

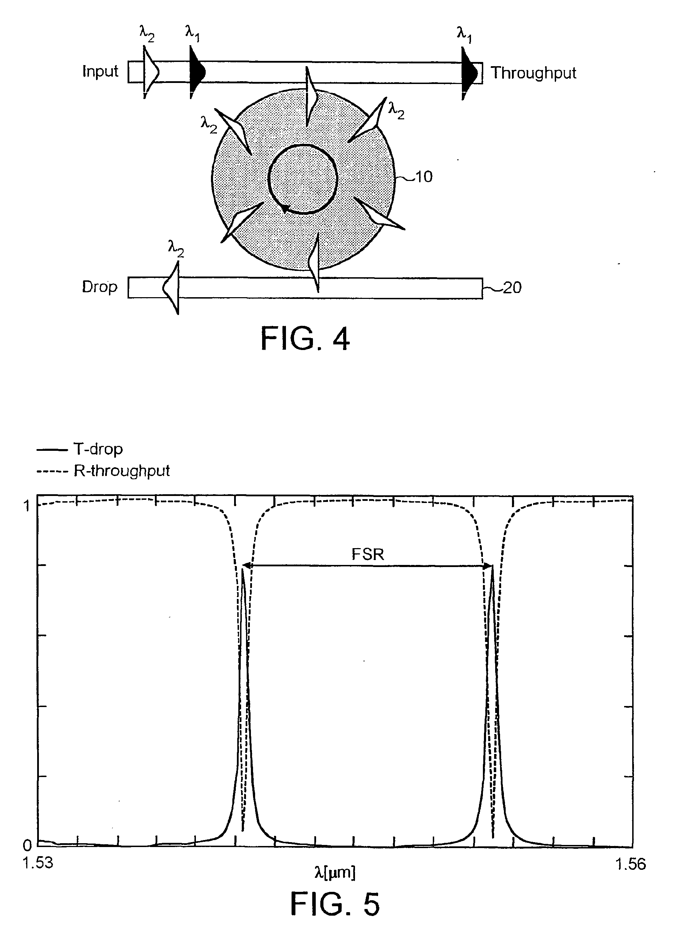

Figure 4 schematically illustrates such a resonator used as a channel drop filter. There are shown two input wavelengths $\lambda_1$ and $\lambda_2$, where $\lambda_1$ is indicative in a generic sense of non-resonant wavelengths and $\lambda_2$ is indicative in a generic sense of resonant wavelengths. As described before, light at $\lambda_1$ is not coupled to the disk 10 and passes to the throughput output, and light at $\lambda_2$ is coupled via the disk to the second waveguide 20 where it emerges (in a reverse direction) at the drop output.

Figure 5 schematically illustrates the wavelength response of the device of Figure 4, where light at the throughput output is represented by a dotted response curve and light at the drop output is represented by a solid response curve, on an arbitrary normalised scale on the vertical axis. The resonant condition at which light is transferred from the input to the drop port occurs as a series of peaks, the width of which depends on the finesse of the device, the peaks being separated by the free spectral range (FSR) as described above.

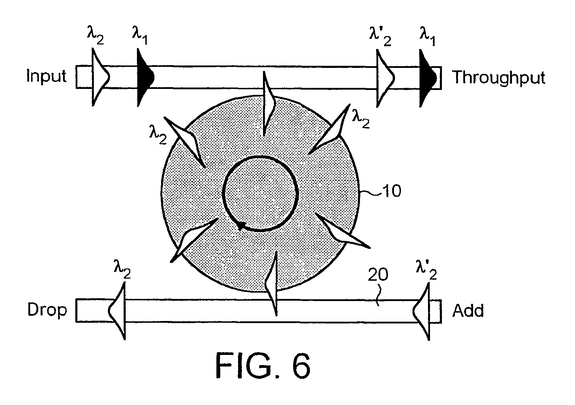

Figure 6 schematically illustrates the use of a resonator as a channel add/drop multiplexer.

This operation is basically similar to the device of Figure 4, except that a wavelength channel to be added is supplied as an input to the second waveguide 20. This "add" wavelength channel is at a wavelength $\lambda_2'$, indicative in a generic sense of resonant wavelengths of the resonator 10. In other words, the channel to be added may be at the same wavelength as the input channel to be dropped, or maybe at another resonant wavelength of the device. The notation $\lambda_2'$ is simply used to indicate that the channel to be added will contain different information to the channel $\lambda_2$ to be dropped.

In embodiments of the invention, the ring or disk-type structure of the resonator cavity 10 is formed of a polymer material. The reason for using such a material is to allow the refractive index of the resonator cavity, and therefore the coupling wavelengths for coupling of light between the waveguides and the resonator cavity, to be varied by changing the temperature of the resonator cavity. This makes use of the fact that polymer materials tend to have a rate of change of refractive index with temperature (dn/dT) of much greater magnitude than typical substrate or waveguide materials and also of an opposite sense to that of substrate or waveguide materials. So, a change in the refractive index of the resonator cavity can be achieved with minimal change to the optical properties of the associated waveguides and substrate.

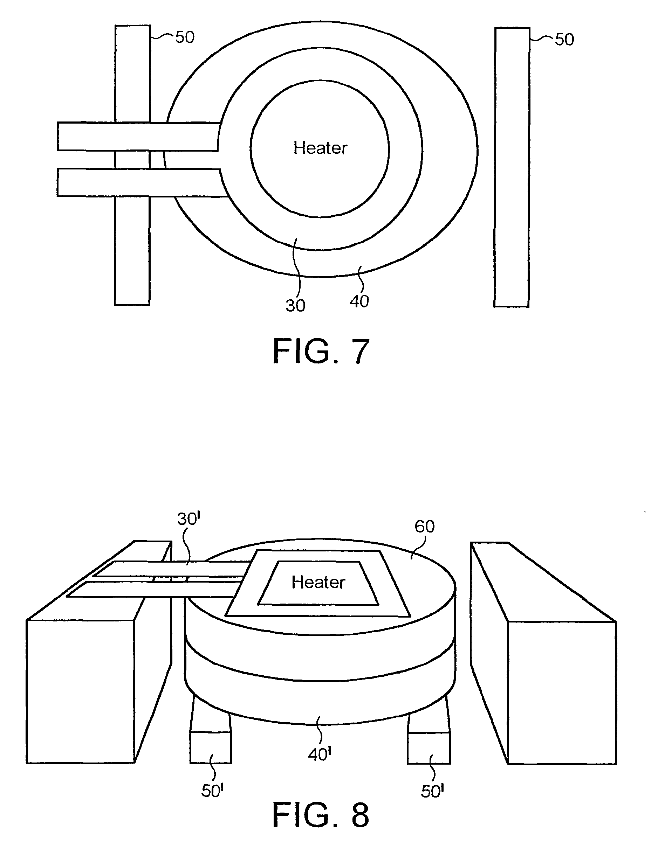

Figure 7 schematically illustrates an electrical heater element 30 formed over a resonator 40 having laterally adjacent input and output waveguides 50 for coupling into and out of the resonator cavity 40. The heater element 30 may be formed of a deposited electrically resistant conductor such as Nichrome. Figure 8 shows a similar arrangement in which an electrical heating element 30' is formed on a polymer cladding 60 overlying a polymer resonator cavity 40'. Input and output waveguides 50' are fabricated beneath the resonant cavity 40'.

In general, the input and output waveguides could be laterally adjacent to the resonant cavity and/or arranged so that the resonant cavity and the waveguides at least partly overlie one another, that is to say that the waveguides are disposed out of the plane of the resonant cavity. Although in Figure 8 the waveguides are shown below the resonant cavity (assuming that the substrate, by convention, would be drawn at the bottom of Figure 8), the waveguides could in fact be formed over the resonant cavity. Also of course, combinations of the above arrangements could be used so that, for example, one waveguide is formed laterally adjacent to a resonant cavity and another out of the plane of the resonant cavity but at least partly overlying it, and so on.

The heating element 30, 30' shown in Figures 7 and 8 could of course be replaced or augmented by a cooling element such as an electrical Peltier element to provide a different range of temperature adjustment.

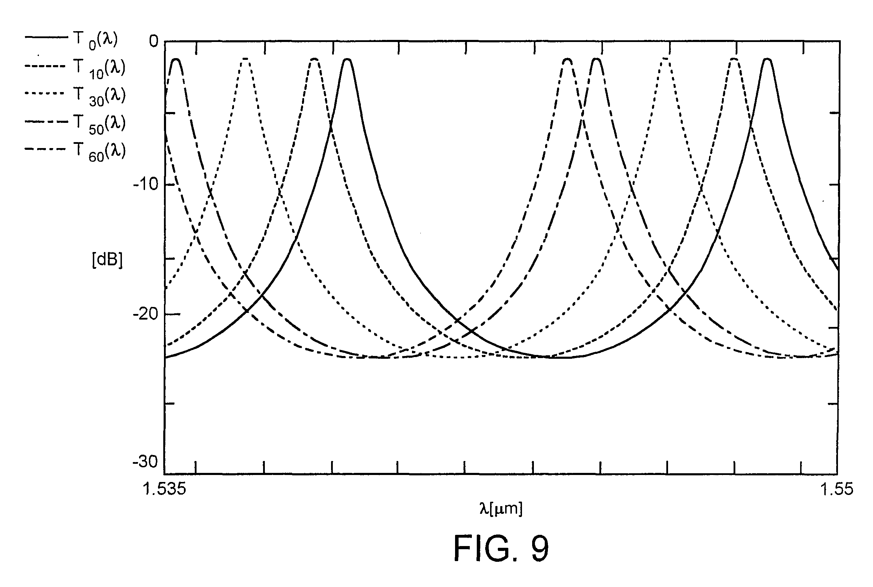

Figure 9 schematically illustrates a temperature response of the above device using a heating and/or cooling arrangement to vary the temperature of a polymer resonant cavity. The device exhibits a peaked response as before (with only the channel drop response being shown for clarity of the diagram) but the peaks may be translated within the wavelength range according to the temperature of the polymer from for example 0 to 60 degrees Celsius. Over this range of temperature and using an example set of device parameters, it can be seen that a variation in the peak position of about half of the free spectral range of the device can be obtained.

So, by adjustment of the cavity temperature, a particular wavelength channel can be made to pass straight through the device (at a non-resonant condition) or to be dropped by the device (at a resonant condition). A control loop (not shown) may be established using an optical detector at the output (drop) port and a conventional negative feedback arrangement to the heating and/or cooling arrangement so that a substantially maximised output response may be obtained at the drop port.

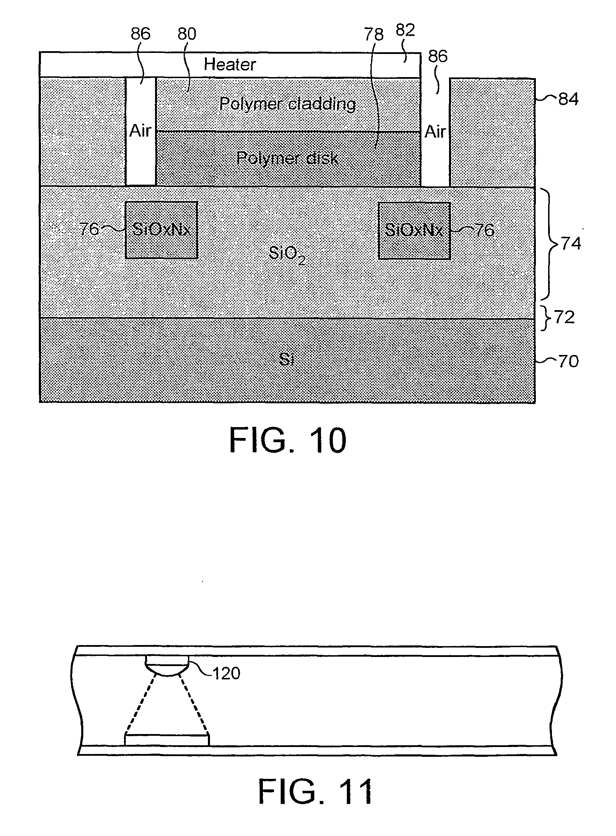

Figure 10 schematically illustrates the fabrication of a channel and/drop multiplexer. In the fabrication process used to create the waveguide and cavity arrangement, a number of layers of material are deposited on a substrate. The overall structure is therefore as follows:

- a substrate 70 of silicon, $SiO_2$ (silica) or the like
- a (possibly doped) silica buffer layer 72 deposited by thermal oxidation or by flame hydrolysis deposition, and of course not required on a silica substrate
- a (possibly doped) silica cladding layer 74 deposited by flame hydrolysis (FHD) or plasma enhanced chemical vapour deposition
- one or more (possibly doped) cores 14 surrounded by the cladding and buffer regions, for example $SiO_xN_x$ (otherwise known as SiON) or highly doped GeO cores. The cores may be formed by laying down a layer of core glass by FHD and a consolidation step, then photolithographically masking and etching to form the core paths. The cladding and any other subsequent layers can then be established by FHD.
- a polymer disk 78 to form the resonant cavity (a ring is an alternative).
- a polymer over-cladding 80, 84 - polymer is used here having a lower melting point than that of the disk 78 to avoid the applied cladding material melting the polymer disk .

- a thin film heater 15 of metal such as, for example, nichrome, chromium, nickel or tantalum nitride, deposited using standard metal deposition techniques.

The polymer disk 78 is surrounded by an air (or at least non-solid) cladding 86. This provides a greater index difference between the disk and its lateral surroundings, so that bending losses in the disk are reduced.

Suitable materials for the ring or disk cavity include silicone resin, polysilioxane, halogenated silicone resin, halogenated polysilioxane, polyamides, polycarbonates or the like. The rate of change of refractive index for these materials with respect to temperature (dn/dT) is of the order of $-1 \times 10^{-4}$ to $-5 \times 10^{-5}$ per degree Celsius. This compares with a much smaller and positive dn/dT for typical glass materials of the order of $+1 \times 10^{-5}$. The much larger magnitude and opposite sense dn/dT for the polymer material means that the heating of the cavity does not have to be completely localised to the cavity - in fact, depending on whether other polymer features requiring independent responses are formed on the same device, the entire device could even be heated or cooled to effect a temperature change of the cavity and so vary its coupling response.

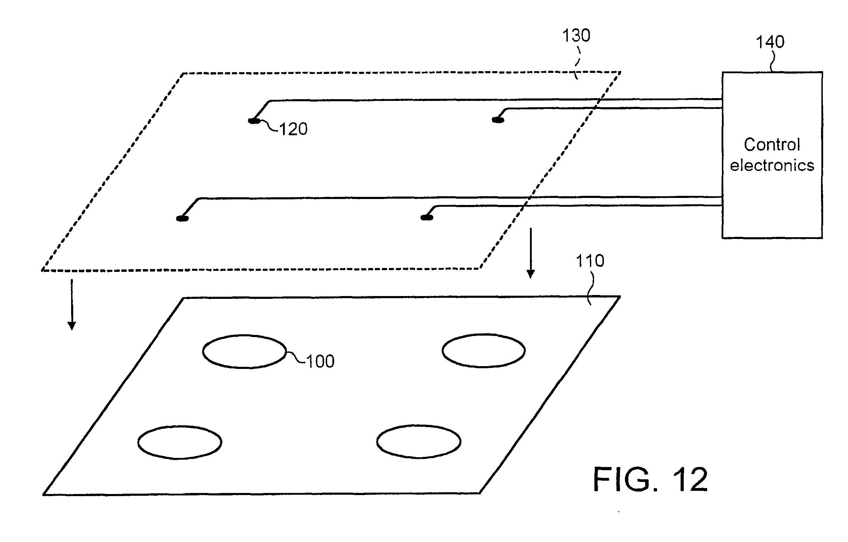

In place of or in addition to the electrical heating and/or cooling arrangement described above, an optical arrangement may be used. Figures 11 and 12 are schematic side and perspective views of an optically heated device.

The basis of this arrangement is that each of one or more resonant cavities 100 (or other temperature-variable optical devices) formed on a substrate 110 is heatable by an optical element 120 such as a laser device. The arrangement of cavities and elements is flexible, in that there may be provided a respective element 120 for each of the heatable cavities 100, two or more elements 120 may be provided for a single cavity 100, or two or more cavities may be heated by a common element if a common mode or tracked response is required.

Conveniently, the heating devices 120 are mounted on a separate mounting arrangement, which may even be a separate substrate 130, which overlies the substrate 110 carrying the heatable devices 100. The two substrates may be aligned using conventional micro electro-mechanical (MEMS) formations such as interengaging protrusions and recesses in the two substrates. The heating elements 120 may be driven by electrical signals generated by control electronics 140. An advantage of this arrangement is that the electrical connections and the heating devices 120 are not formed on the substrate 110 carrying the temperature-sensitive optically active devices (e.g. cavities) 100, which therefore allows the optically active devices 100 to be positioned closer to one another because space does not need to be allocated on the substrate 100 for electrical wiring and the like.

Of course, in Figure 12 the waveguide and other structural elements on the substrate 110 have been omitted simply for clarity of the diagram.

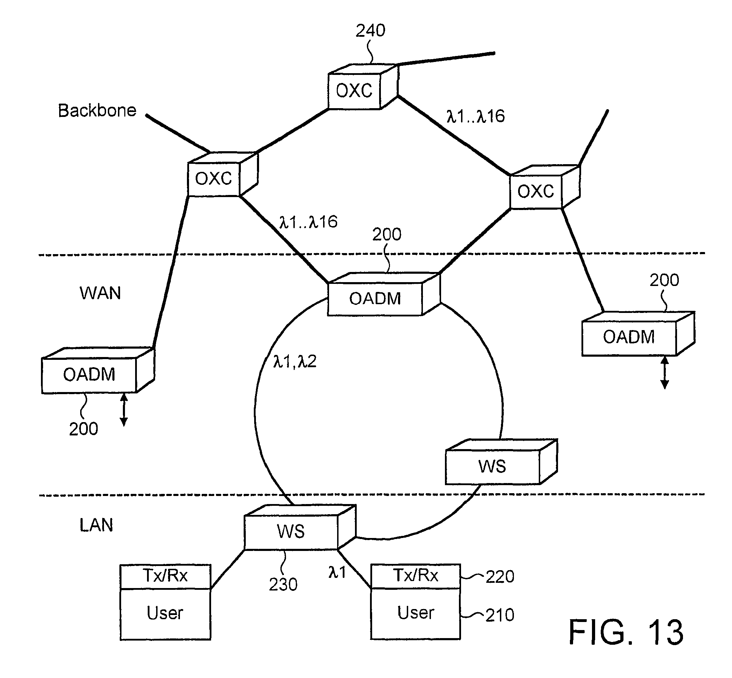

Figure 13 schematically illustrates the use of a channel add/drop multiplexer 200 within an optical telecommunication system. The optical telecommunication system comprises a so-called backbone or trunk communication structure connected via a wide area network (WAN) to a user within a local area network (LAN). A typical user 210 generates and receives traffic at a user wavelength $\lambda_1$ via an optical transmitter/receiver 220. $\lambda_1$ is passed from the LAN to the WAN by a wavelength switch 230. It is then routed into the backbone structure via an add/drop multiplexer 200 to form one of many channels switched by optical cross connects (OXC) 240.

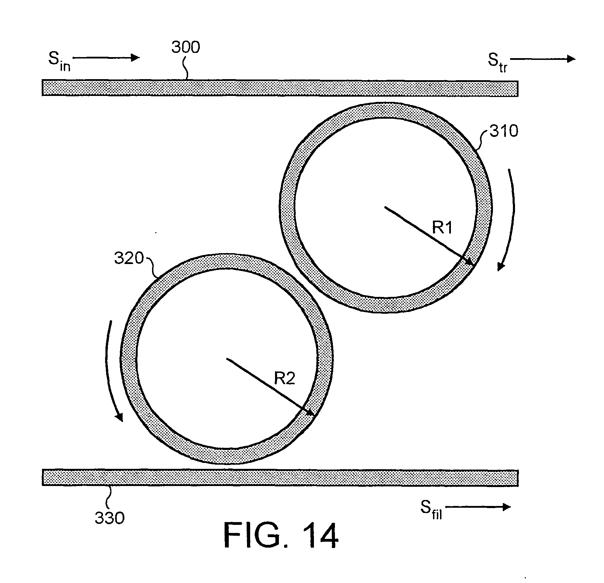

In the following description, some basic principles relating to disk or ring resonators will first be described by way of background technical information to put the embodiment of the invention into context. Embodiments of the invention using plural resonators are described with reference to Figures 14 to 17, although they may of course include any technical features described with reference to the single resonator examples shown in the earlier figures. For example, though not exclusively, heating, cooling or coupling arrangements described with reference to Figures 1-13 and/or 18-21 may be incorporated into the embodiments of Figures 14 to 17.

Figure 14 schematically illustrates a double-disk (or ring) device having a series resonator arrangement. Although the drawing shows a ring structure, of course disks could be used, or annuli with smaller openings in the middle, and so on. Also, although a double disk arrangement is shown, another plural number of disks could of course be used, with the multiple disks arranged in a series-coupling sense or a series/parallel coupling sense.

The basic configuration of the double-ring resonator is that light $S_{in}$ couples from an input waveguide 300 into an upper ring 310 of radius R2, and propagates in a clockwise direction, similar to the single ring resonator. At the point where the two rings approach one other light is coupled into a second ring 320 of radius R1, and travels in an anti-clockwise direction. Finally light is coupled into an output waveguide and exits ($S_{fil}$) towards the right, all directions being simply as shown in the Figure.

In one example, the radii R1 and R2 (or other ring or disk properties) can be made to be different so that the free spectral ranges of the two resonators are different.

So, if the free-spectral ranges of the lower and upper rings are FSR2 and FSR1 respectively then the free-spectral range of the combination, FSR, is given by

$$FSR = N \cdot FSR1 = M \cdot FSR2$$

where N and M are natural and coprime numbers (i.e. not having a common divisor).

The effect is to increase the free spectral range of the overall resonator arrangement compared to that of either individual cavity. This is equivalent to that of Moiré fringes caused by superimposed grids of differing pitch (e.g. net curtains). This principle is sometimes known as the 'Vernier effect'.

In another arrangement the disk radii and/or other properties can be arranged so as to give substantially the same wavelength response. In this case, the finesse of the arrangement is greater than that of any individual one of the resonator cavities.

In either situation, a significant problem in design and manufacture is that of arranging that the wavelength responses of the individual resonator cavities are precisely aligned to those required for the desired response of the overall resonator arrangement.

In particular, in the Vernier arrangement, the actual coupling peak of the combined arrangement depends on the overlap of respective peaks from the multiply resonators. As with any Moiré type system, small changes can have large effects. A small error in the tuning of one resonator can mean that the wrong two peaks overlap and the response of the arrangement is dramatically incorrect.

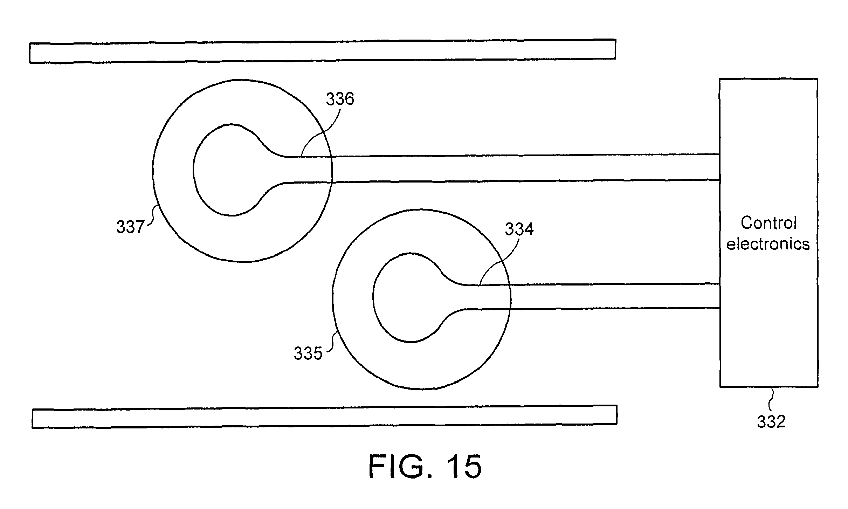

In the present embodiments this problem is addressed by providing a heating and/or cooling arrangement to heat or cool at least one of the resonator cavities so as to alter its optical properties, for example by thermo-optic alteration of the refractive index of the cavity(ies). This can be via heating/cooling of regular waveguide materials such as SiON or silica, or by the use of special high dn/dT materials for one or more cavities such as polymers. Figure 15 schematically illustrates an electrical heating/cooling arrangement for a two-disk system, in which control electronics 332 provides independent control for heating elements 334, 336 relevant to two resonator disks 335, 337.

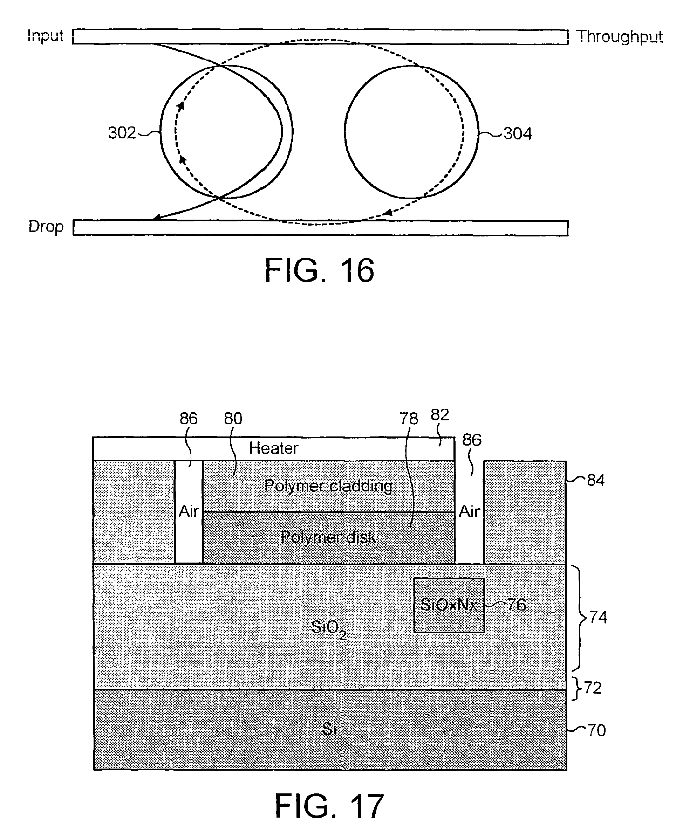

Figure 16 schematically illustrates a double-disk system having a parallel resonator arrangement. The disks may be nominally identical or may have deliberately different properties such as different FSRs, as described above with reference to Figure 14. Again, a heating/cooling arrangement is used to adjust the responses of the resonator cavities, which are preferably fabricated from a polymer material.

Here, assuming the resonant wavelength of the cavities matches the wavelength of incoming light, light entering via the Input port is at least partially coupled into a first resonator 302 and coupled out to the Drop port. Any light remaining in the Input waveguide, or coupled back into the Input waveguide from the first waveguide 302, may be at least partially coupled into a second resonator 304 and back into the Drop port, and so on. Input light at wavelengths which are not coupled into the resonators emerges at the Throughput port.

In a typical example, assume that at the input port a signal at a normalised optical power of 0dB is introduced. Assuming resonance, the first resonator 302 acts to couple a large part of this light into the Drop port to give a power at the Drop port of, say, -5dB and a lower proportion, say -15dB, propagating in the direction of the Throughput port. A further transfer occurs at the second resonator 304 resulting in a signal at -30dB emerging at the Throughput port. The second resonator contributes - 20dB to the signal heading towards the Drop port, but this is in turn coupled over with an extinction of -15dB giving an effective power of -35dB heading towards the Throughput port. Again, almost all of this is coupled back by the second resonator 304 towards the Drop port, and so on. This cross-coupling keeps occurring as indicated by the dotted lines in Figure 16, but as each time there is an effective attenuation of -15dB, the powers soon become negligible.

Figure 17 schematically illustrates the fabrication of a channel and/ drop multiplexer using a polymer material for the resonator cavities. For clarity of the diagram, as it is a side view only one cavity and one waveguide have been shown. In the fabrication process used to create the waveguide and cavity arrangement, a number of layers of material are deposited on a substrate. The overall structure is therefore as follows:

- a substrate 70 of silicon, $SiO_2$ (silica) or the like
- a (possibly doped) silica buffer layer 72 deposited by thermal oxidation or by flame hydrolysis deposition, and of course not required on a silica substrate
- a (possibly doped) silica cladding layer 74 deposited by flame hydrolysis (FHD) or plasma enhanced chemical vapour deposition
- one or more (possibly doped) cores 14 surrounded by the cladding and buffer regions, for example $SiO_xN_x$ (otherwise known as SiON) cores. The cores may be formed by laying down a layer of core glass by FHD and a consolidation step, then photolithographically masking and etching to form the core paths. The cladding and any other subsequent layers can then be established by FHD.

- a polymer disk 78 to form the resonant cavity.
- a polymer over-cladding 80, 84 - polymer is used here having a lower melting point than that of the disk 78 to avoid the applied cladding material melting the polymer disk.
- a thin film heater 15 of metal such as, for example, nichrome, chromium, nickel or tantalum nitride, deposited using standard metal deposition techniques.

The polymer disk 78 is surrounded by an air (or at least non-solid) cladding 86. This provides a greater index difference between the disk and its lateral surroundings, so that bending losses in the disk are reduced.

Suitable materials for the ring or disk cavity (apart from the possibility of using the same waveguide material as used in the rest of the device) include silicone resin, polysilioxane, halogenated silicone resin, halogenated polysilioxane, polyamides, polycarbonates or the like. The rate of change of refractive index for these materials with respect to temperature (dn/dT) is of the order of $-1 \times 10^{-4}$ to $-5 \times 10^{-5}$ per degree Celsius. This compares with a much smaller and positive dn/dT for typical glass materials of the order of $+1 \times 10^{-5}$. The much larger magnitude and opposite sense dn/dT for the polymer material means that the heating of the cavity does not have to be completely localised to the cavity - in fact, depending on whether other polymer features requiring independent responses are formed on the same device, the entire device could even be heated or cooled to effect a temperature change of the cavity and so vary its coupling response.

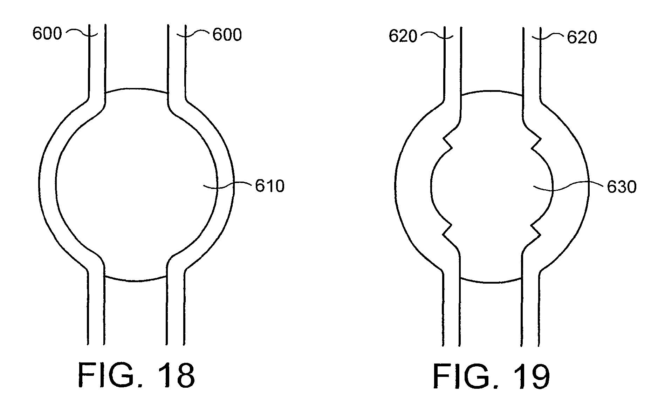

Figure 18 schematically illustrates a resonator arrangement using bendmode to whispering gallery mode (WGM) coupling. Two waveguides 600 are shown, each of which lies outside of the plane of the circular resonator 610 (i.e. vertical coupling is used). The waveguides are curved over a coupling region, preferably so as to follow the outer shape of the resonator. Figure 19 schematically illustrates a resonator arrangement using WGM to WGM coupling. Here, the waveguides 620 are curved as in Figure 18, but are also widened in the plane of the circular resonator 630 over a part of a coupling region. The transition to a widened cross-section allows WGMs to propagate in the waveguide, so allowing WGM to WGM coupling between the waveguide and the resonator.

In a practical integrated optical fabrication both of the arrangements of Figures 18 and 19, it is preferred that the lateral peripheral edges of the resonator and of the waveguide are bounded by a large refractive index difference, e.g. being adjacent to an air gap. In comparison with a structure having the waveguide(s) buried in cladding material, providing the air interface can reduce bending losses in the curved waveguide sections. Of course, the term "air" is used here in a very general sense to distinguish over a solid or liquid material adjacent to the waveguide. In a real fabrication, the skilled man will of course realise that the "air gap" could be filled by atmospheric air, gases used during the fabrication process, a deliberately introduced gas or gas mixture, or even a partial or substantially full vacuum.

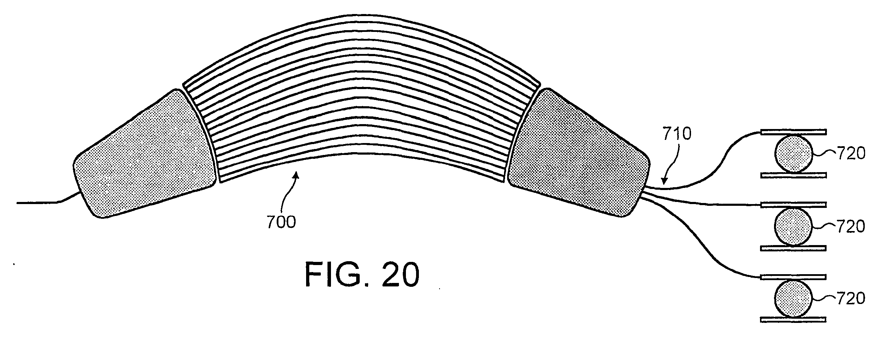

Figure 20 is a schematic diagram of a device using an arrayed waveguide grating (AWG) with multiple resonators.

The AWG allows the 30 nm range useable in systems having Erbium doped amplification (as an example) to be split into smaller wavelength ranges of, for example, up to 5 nm each, for separate handling by a resonator type device.

Referring to Figure 20, an input optical signal is supplied to an AWG 700. In known manner, the AWG acts as a wavelength separator to divide the input optical signal into separate wavelength channel output signals 710. Each of these is supplied to a resonator arrangement 720. The resonator arrangement is shown for simplicity in Figure 20 as a single resonator, but can of course be any other resonator arrangement such as other arrangements described in the present specification.

At the output of each resonator arrangement is an optical signal within a reduced wavelength band compared to the band available for the input optical signal. If there is a need to recombine these bands into a single output optical signal then another AWG could of course be used. However, a particularly convenient way of achieving this with a single AWG is described below. This has the advantage of reducing the chip area required to fabricate the device, as AWGs tend to be rather large devices by the standards of integrated optical fabrication.

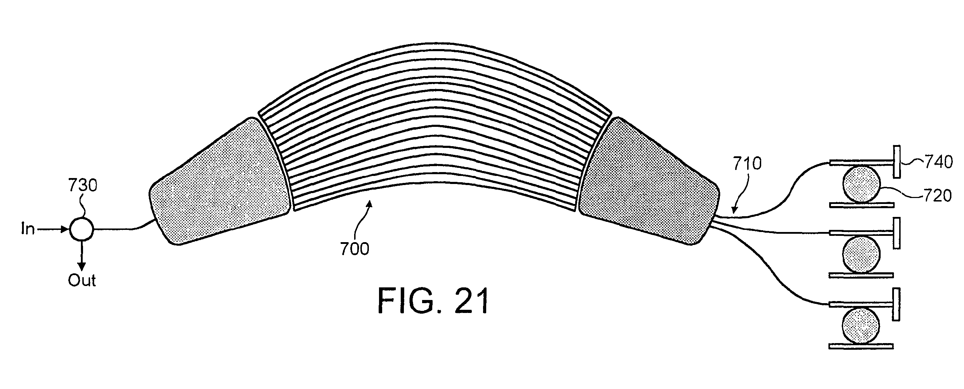

Figure 21 is a schematic diagram of a device using an AWG coupled to a multiple resonator/reflector arrangement. Here, as with Figure 20, an input optical signal, supplied via a circulator 730, is again split into multiple wavelength channels by the AWG. Each separate wavelength channel is then processed by a respective resonator arrangement, again shown as a single resonator in this diagram for simplicity. The output from each resonator arrangement is reflected by a high reflectivity (HR) mirror 740, through the resonator arrangement and back through the AWG. In known manner, the AWG acts to recombine the wavelength channels into a single optical output signal at the output port of the circulator.

**Claims**

1.  An integrated optical signal handling device comprising:

      a substrate (70);

a light-guiding waveguide (300) formed in or on the substrate, the waveguide being arranged to carry an input optical signal **characterised in that** it comprises

a resonator cavity region (78) formed in or on the substrate, of a material having a rate of change of refractive index with temperature of greater magnitude than that of the substrate or waveguide material, the resonator region being adjacent to the waveguide so as to allow optical coupling between the waveguide and the resonator region at one or more coupling wavelengths; and

a heating and/or cooling arrangement (100,120) operable to vary the temperature of at least the resonator region so as to cause corresponding variation in the coupling wavelengths.

2. A device according to claim 1, in which the resonator region substantially planar region.

3. A device according to claim 2, in which the resonator region is a generally circular region.

4. A device according to claim 3, in which the resonator region is a disk-shaped region.

5. A device according to claim 2, in which the resonator region is a generally elliptical region.

6. A device according to any one of claims 2 to 5, in which the waveguide is not disposed in the plane of the resonator region.

7. A device according to claim 6, in which the resonator region and the waveguide are formed so as to overly, at least in part, one another.

8. A device according to claim 6 or claim 7, in which the resonator region is bounded, in the plane of the resonator region, by an air gap.

9. A device according to any one of the preceding claims, in which the resonator region is formed of a polymer material.

10. A device according to any one of the preceding claims, in which the heating and/or cooling arrangement comprises at least an electrical heating element.

11. A device according to any one of the preceding claims, in which the heating and/or cooling arrangement comprises at least an optical heating arrangement.

12. A device according to claim 10, in which the optical heating arrangement comprises one or more laser devices arranged to irradiate at least the resonator region.

13. A device according to any one of the preceding claims, in which the heating and/or cooling arrangement comprises at least a Peltier element.

14. A device according to any one of the preceding claims, comprising a polymer cladding layer disposed on the resonator region.

15. A device according to any one of the preceding claims, comprising at least a second light-guiding waveguide formed in or on the substrate adjacent to the resonator region so as to allow optical coupling between the waveguide and the resonator region at one or more coupling wavelengths.

16. An optical signal handling device comprising:

a wavelength separating device for separating an input optical signal into at least two wavelength channels; and
two or more optical signal handling devices according to any one of the preceding claims, each arranged to process a respective one of the wavelength channels.

17. A device according to claim 16, in which the wavelength separating device is an arrayed waveguide grating.

18. A device according to claim 16 or claim 17, comprising a respective reflector associated with the optical signal handling device processing each wavelength channel so as to reflect light back to the wavelength separating device.

**19.** A device according to any one of the preceding claims, comprising a resonator arrangement having two or more resonator cavity regions formed of polymer material in or on the substrate and optically coupled to allow transfer of optical signals between the resonator cavity regions, the resonator arrangement being adjacent to the waveguide so as to allow optical coupling between the waveguide and the resonator arrangement at one or more coupling wavelengths.

**20.** A device according to claim 19, in which the resonator arrangement comprises a series arrangement of two or more resonator cavities so that, in use, light may be coupled:

between the light guiding waveguide and a first resonator cavity in the series arrangement;
between the first resonator cavity and a further resonator cavity in the series arrangement; and
between the further resonator cavity and a second light guiding waveguide.

**21.** A device according to claim 19, in which the resonator arrangement comprises a parallel arrangement of two or more resonator cavities linking the light guiding waveguide and the second light guiding waveguide so that light may be coupled between the light guiding waveguide and a second light guiding waveguide via two or more resonator cavities at a time.

**22.** A device according to any one of the preceding claims, in which the waveguide follows a substantially curved path over at least part of a coupling portion at which light may be coupled between the waveguide and the resonator.

**23.** A device according to claim 22, in which an outer lateral edge of the waveguide is bounded by an air gap.

**24.** A device according to claim 22 or 23, in which the cross-sectional area of the waveguide is enlarged over at least part of a coupling portion at which light may be coupled between the waveguide and the resonator.

**25.** A device according to claim 24, in which the cross-sectional area is enlarged in the plane of the resonator.

**26.** An optical communications system comprising one or more optical signal handling devices according to any one of the preceding claims.

**Patentansprüche**

**1.** Integrierte optische Signalverarbeitungseinrichtung mit:

einem Substrat (70),
einem Lichtwellenleiter (300), der in oder auf dem Substrat gebildet ist, wobei der Wellenleiter so eingerichtet ist, dass er ein optisches Eingangssignal überträgt, **dadurch gekennzeichnet, dass** sie aufweist,
einen Resonator-Kavitätenbereich (78), der in oder auf dem Substrat aus einem Material gebildet ist, das eine Änderungsrate des Brechungsindex mit der Temperatur mit einer größeren Stärke aufweist als die des Substrat- oder Wellenleitermaterials, wobei der Resonatorbereich neben dem Wellenleiter liegt, um eine optische Kopplung zwischen dem Wellenleiter und dem Resonatorbereich bei einer oder mehreren Kopplungswellenlängen zu ermöglichen, und
eine Heiz- und/oder Kühlanordnung (100,120) die so betreibbar ist, dass sie die Temperatur zumindest des Resonatorbereichs so variiert, dass eine entsprechende Änderung der Kopplungswellenlängen bewirkt wird.

**2.** Vorrichtung nach Anspruch 1, in der der Resonatorbereich ein im wesentlichen ebener Bereich ist.

**3.** Vorrichtung nach Anspruch 2, in der der Resonatorbereich ein im Allgemeinen kreisförmiger Bereich ist.

**4.** Vorrichtung nach Anspruch 3, in der der Resonatorbereich ein scheibenförmiger Bereich ist.

**5.** Vorrichtung nach Anspruch 2, in der der Resonatorbereich ein im Allgemeinen elliptischer Bereich ist.

**6.** Vorrichtung nach einem der Ansprüche 2 bis 5, in der der Wellenleiter nicht in der Ebene des Resonatorbereichs angeordnet ist.

7. Vorrichtung nach Anspruch 6, in der der Resonatorbereich und der Wellenleiter so gebildet sind, dass sie einander zumindest teilweise überlappen.

8. Vorrichtung nach Anspruch 6 oder 7, in der der Resonatorbereich in der Ebene des Resonatorbereichs durch einen Luftspalt begrenzt ist.

9. Vorrichtung nach einem der vorhergehenden Ansprüche, in der der Resonatorbereich aus einem Polymermaterial gebildet ist.

10. Vorrichtung nach einem der vorhergehenden Ansprüche, in der die Heiz- und/oder Kühlanordnung mindestens ein elektrisches Heizelement aufweist.

11. Vorrichtung nach einem der vorhergehenden Ansprüche, in der die Heiz- und/oder Kühlanordnung mindestens eine optische Heizanordnung aufweist.

12. Vorrichtung nach Anspruch 10, in der die optische Heizanordnung eine oder mehrere Laservorrichtungen aufweist, die so eingerichtet sind, dass sie zumindest den Resonatorbereich beleuchten.

13. Vorrichtung nach einem der vorhergehenden Ansprüche, in der die Heiz- und/oder Kühlanordnung mindestens ein Peltier-Element aufweist.

14. Vorrichtung nach einem der vorhergehenden Ansprüche, mit einer auf dem Resonatorbereich angeordneten Polymerhüllschicht.

15. Vorrichtung nach einem der vorhergehenden Ansprüche mit mindestens einem zweiten Lichtwellenleiter, der in oder auf dem Substrat neben dem Resonatorbereich gebildet ist, so dass eine optische Kopplung zwischen dem Wellenleiter und dem Resonatorbereich bei einer oder mehreren Kopplungswellenlängen möglich ist.

16. Optische Signalverarbeitungseinrichtung mit:

einer Wellenlängentrenneinrichtung zum Trennen eines optischen Eingangssignals in mindestens zwei Wellenlängenkanäle und
zwei oder mehr optischen Signalverarbeitungseinrichtungen gemäß einem der vorhergehenden Ansprüche, wobei jede so eingerichtet ist, dass sie einen entsprechenden der Wellenlängenkanäle verarbeitet.

17. Vorrichtung nach Anspruch 16, in der die Wellenlängentrenneinrichtung ein im Array angeordnetes Wellenleitergitter ist.

18. Vorrichtung nach Anspruch 16 oder 17, mit einem entsprechenden Reflektor, der der optischen Signalverarbeitungseinrichtung zugeordnet ist, die den jeweiligen Wellenlängenkanal verarbeitet, um Licht zurück zu der Wellenlängentrenneinrichtung zu reflektieren.

19. Vorrichtung nach einem der vorhergehenden Ansprüche mit einer Resonatoranordnung mit zwei oder mehr Resonator-Kavitätenbereichen, die aus einem Polymermaterial in oder auf dem Substrat gebildet sind und die optisch gekoppelt sind, um eine Übertragung von optischen Signalen zwischen den Resonator-Kavitätenbereichen zu ermöglichen, wobei die Resonatoranordnung neben dem Wellenleiter liegt, um eine optische Kopplung zwischen dem Wellenleiter und der Resonatoranordnung bei einer oder mehreren Kopplungswellenlängen zu ermöglichen.

20. Vorrichtung nach Anspruch 19, in der die Resonatoranordnung eine Reihenanordnung von zwei oder mehr Resonatorkavitäten aufweist, so dass im Betrieb Licht gekoppelt werden kann:

zwischen dem Lichtwellenleiter und einer ersten Resonatorkavität in der Reihenanordnung,
zwischen der ersten Resonatorkavität und einer weiteren Resonatorkavität in der Reihenanordnung und
zwischen der weiteren Resonatorkavität und einem zweiten Lichtwellenleiter.

21. Vorrichtung nach Anspruch 19, in der die Resonatoranordnung eine Parallelanordnung zweier oder mehrerer Resonatorkavitäten aufweist, welche den Lichtwellenleiter und den zweiten Lichtwellenleiter verbinden, so dass Licht zwischen dem Lichtwellenleiter und einem zweiten Lichtwellenleiter durch zwei oder mehr Resonatorkavitäten gleichzeitig gekoppelt werden kann.

**22.** Vorrichtung nach einem der vorhergehenden Ansprüche, in der der Wellenleiter einem im Wesentlichen gekrümmten Pfad über mindestens einen Teil eines Kopplungsteils folgt, bei dem Licht zwischen dem Wellenleiter und dem Resonator gekoppelt werden kann.

**23.** Vorrichtung nach Anspruch 22, in der eine äußere Querkante des Wellenleiters durch einen Luftspalt begrenzt ist.

**24.** Vorrichtung nach Anspruch 22 oder 23, in der die Querschnittsfläche des Wellenleiters über zumindest einen Teil eines Kopplungsbereichs, in dem Licht zwischen dem Wellenleiter und dem Resonator gekoppelt werden kann, vergrößert ist.

**25.** Vorrichtung nach Anspruch 24, in der die Querschnittsfläche in der Ebene des Resonators vergrößert ist.

**26.** Optisches Kommunikationssystem mit einer oder mehreren optischen Signalverarbeitungseinrichtungen gemäß einem der vorhergehenden Ansprüche.


**Revendications**

**1.** Dispositif de traitement de signal optique intégré, comprenant :

un substrat (70) ;
un guide d'ondes guidant la lumière (300) formé dans ou sur le substrat, le guide d'ondes étant conçu pour transporter un signal optique d'entrée, **caractérisé en ce qu'**il comprend :
une région formant cavité de résonateur (78) formée dans ou sur le substrat, constituée d'un matériau ayant un taux de variation de l'indice de réfraction avec la température d'amplitude supérieure à celui du matériau du substrat ou du guide d'ondes, la région de résonateur étant adjacente au guide d'ondes de façon à permettre un couplage optique entre le guide d'ondes et la région de résonateur à une ou plusieurs longueurs d'onde de couplage ; et
un système de chauffage et/ou de refroidissement (100, 120) pouvant être mis en oeuvre pour faire varier la température d'au moins la région de résonateur afin de provoquer une variation correspondante des longueurs d'onde de couplage.

**2.** Dispositif selon la revendication 1, dans lequel la région de résonateur est une région sensiblement plane.

**3.** Dispositif selon la revendication 2, dans lequel la région de résonateur est une région globalement circulaire.

**4.** Dispositif selon la revendication 3, dans lequel la région de résonateur est une région en forme de disque.

**5.** Dispositif selon la revendication 2, dans lequel la région de résonateur est une région globalement elliptique.

**6.** Dispositif selon l'une quelconque des revendications 2 à 5, dans lequel le guide d'ondes n'est pas disposé dans le plan de la région de résonateur.

**7.** Dispositif selon la revendication 6, dans lequel la région de résonateur et le guide d'ondes sont formés de façon à être superposés, au moins en partie, l'un sur l'autre.

**8.** Dispositif selon la revendication 6 ou 7, dans lequel la région de résonateur est délimitée, dans le plan de la région de résonateur, par un interstice d'air.

**9.** Dispositif selon l'une quelconque des revendications précédentes, dans lequel la région de résonateur est formée d'un matériau polymère.

**10.** Dispositif selon l'une quelconque des revendications précédentes, dans lequel le système de chauffage et/ou de refroidissement comprend au moins un élément chauffant électrique.

**11.** Dispositif selon l'une quelconque des revendications précédentes, dans lequel le système de chauffage et/ou de refroidissement comprend au moins un dispositif de chauffage optique.

12. Dispositif selon la revendication 10, dans lequel le système de chauffage optique comprend un ou plusieurs dispositif (s) à laser conçu(s) pour irradier au moins la région de résonateur.

13. Dispositif selon l'une quelconque des revendications précédentes, dans lequel le système de chauffage et/ou de refroidissement comprend au moins un élément Peltier.

14. Dispositif selon l'une quelconque des revendications précédentes, comprenant une couche de gaine polymère disposée sur la région de résonateur.

15. Dispositif selon l'une quelconque des revendications précédentes, comprenant au moins un deuxième guide d'ondes guidant la lumière formé dans ou sur le substrat à proximité immédiate de la région de résonateur de façon à permettre un couplage optique entre le guide d'ondes et la région de résonateur à une ou plusieurs longueurs d'onde de couplage.

16. Dispositif de traitement de signal optique comprenant :

   un dispositif de séparation de longueur d'onde pour séparer un signal optique d'entrée en au moins deux canaux de longueurs d'onde ; et
   deux ou plusieurs dispositifs de traitement de signal optique selon l'une quelconque des revendications précédentes, chacun conçu pour traiter l'un, respectif, des canaux de longueur d'onde.

17. Dispositif selon la revendication 16, dans lequel le dispositif de séparation de longueur d'onde est un réseau sélectif planaire.

18. Dispositif selon la revendication 16 ou 17, comprenant un réflecteur respectif associé au dispositif de traitement de signal optique traitant chaque canal de longueur d'onde de façon à rétroréfléchir la lumière vers le dispositif de séparation de longueur d'onde.

19. Dispositif selon l'une quelconque des revendications précédentes, comprenant un système résonateur ayant deux ou plusieurs régions formant cavités de résonateur formées d'un matériau polymère dans ou sur le substrat et optiquement couplées pour permettre le transfert de signaux optiques entre les régions formant cavités de résonateur, le système résonateur étant à proximité immédiate du guide d'ondes de façon à permettre un couplage optique entre le guide d'ondes et le système résonateur à une ou plusieurs longueurs d'onde de couplage.

20. Dispositif selon la revendication 19, dans lequel le système résonateur comprend un agencement en série de deux ou plusieurs cavités de résonateur afin que, lors de l'utilisation, de la lumière puisse être couplée :

   entre le guide d'ondes guidant la lumière et une première cavité de résonateur dans l'agencement en série ;
   entre la première cavité de résonateur et une autre cavité de résonateur dans l'agencement en série ; et
   entre la cavité de résonateur supplémentaire et un deuxième guide d'ondes guidant la lumière.

21. Dispositif selon la revendication 19, dans lequel le système résonateur comprend un agencement en parallèle de deux ou plusieurs cavités de résonateur reliant le guide d'ondes guidant la lumière au deuxième guide d'ondes guidant la lumière afin que de la lumière puisse être couplée en même temps entre le guide d'ondes guidant la lumière et un deuxième guide d'ondes guidant la lumière par l'intermédiaire de deux ou plusieurs cavités de résonateur.

22. Dispositif selon l'une quelconque des revendications précédentes, dans lequel le guide d'ondes suit un trajet sensiblement incurvé sur au moins une partie d'une zone de couplage dans laquelle de la lumière peut être couplée entre le guide d'ondes et le résonateur.

23. Dispositif selon la revendication 22, dans lequel un bord latéral extérieur du guide d'ondes est délimité par un interstice d'air.

24. Dispositif selon la revendication 22 ou 23, dans lequel la superficie en section transversale du guide d'ondes est augmentée sur au moins une partie de la zone de couplage dans laquelle de la lumière peut être couplée entre le guide d'ondes et le résonateur.

**25.** Dispositif selon la revendication 24, dans lequel la superficie en section transversale est augmentée dans le plan du résonateur.

**26.** Système de communication optique comprenant un ou plusieurs dispositifs de traitement de signal optique selon l'une quelconque des revendications précédentes.

FIG. 1

FIG. 2

FIG. 3

FIG. 4

FIG. 5

FIG. 6

Heater

30    40

FIG. 7

30'    60

Heater

40'

50'    50'

FIG. 8

FIG. 9

EP 1 423 751 B1

FIG. 10

FIG. 11

FIG. 12

EP 1 423 751 B1

FIG. 13

EP 1 423 751 B1

FIG. 14

FIG. 15

Input | | Throughput

302 304

Drop | |

## FIG. 16

86  80                    78  82
                              86
Heater
                                        84
Polymer cladding
Air                          Air
Polymer disk

SiOxNx  76
                                        74
SiO₂

                                        72

Si                                      70

## FIG. 17

600 600

610

## FIG. 18

620 620

630

## FIG. 19

FIG. 20

EP 1 423 751 B1

FIG. 21

EP 1 423 751 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0138905 A2

- WO 0133267 A1

### Non-patent literature cited in the description

- **SUZUKI et al.** Integrated-optic double-ring resonators with a wide free spectral range of 14GHz. *Journal of Lightwave Technology,* 1995, vol. 13 (8), 1766-1771
- **LITTLE et al.** Microring resonator channel dropping filters. *Journal of Lightwave Technology,* 1997, vol. 15 (6), 998-1005

- **B. E. LITTLE et al.** Vertically coupled glass microring resonator channel dropping filters. *IEEE Photonics technology Letters,* 1999, vol. 11 (2), 215-217
- Microring resonator channel dropping filters. *Journal of Lightwave Technology,* 1997, vol. 15 (6), 998-1005
- Ultra-compact Si-SiO2 microring resonator optical channel dropping filters. *IEEE Photonics technology Letters,* 1998, vol. 10 (4), 549-551